# EUROPEAN PATENT SPECIFICATION

(11) **EP 1 668 999 B1**
(45) Date of publication and mention of the grant of the patent: **13.02.2008**
(21) Application number: 05111748.9
(22) Date of filing: 06.12.2005
(51) Int. Cl.: A41D 13/018, B62J 27/00

(54) **Airbag apparatus for a vehicle passenger**
Gassackvorrichtung für Fahrzeuginsassen
Sac gonflable pour passeger

(30) Priority: 10.12.2004 JP 2004357740
(43) Date of publication of application: 14.06.2006
(73) Proprietor: Honda Motor Co., Ltd., Tokyo (JP)
(72) Inventor: Goto, Hiroshi, Wako-shi Saitama (JP); Iijima, Satoshi, Wako-shi Saitama (JP)
(74) Representative: Poulin, Gérard

(56) References cited:
- EP-A- 0 925 730
- DE-A1- 10 009 028
- DE-A1- 19 821 134
- GB-A- 2 310 787
- US-A- 4 059 852
- US-A1- 2003 155 758
- US-A1- 2003 188 371

## Description

### TECHNICAL FIELD

The present invention relates to an airbag apparatus that is put on a vehicle passenger's body in advance for absorbing an impact against the passenger.

### BACKGROUND ART

Hitherto, for use in conjunction with driving a vehicle, specifically a motorcycle, an airbag apparatus as known from e.g. JP-A-9-66789 is configured in such a manner that a passenger 1 puts on a wearing member 10B having an airbag body 10A and an inflator 16, a belt 11 to be connected to the inflator 16 is connected to a vehicle body via detachable fixing members 12A, 12B provided with sensors. When the motorcycle has a collision and the passenger 1 comes apart from the vehicle body, connection of the fixing members 12A, 12B are forcedly released, and sensors sense and react to activate the inflator 16, whereby the airbag body 10A is inflated and deployed to absorb an impact against the passenger 1.

However, in the airbag apparatus in the related art as described above, the passenger is directly connected to the vehicle body via the belt in a normal operating state, free movement of the body is constrained, and hence the operation may be disadvantageously hindered.

In order to solve such a disadvantage, it is necessary to keep the belt in a loosed state. However, in this case, if a collision occurs, the airbag apparatus is not activated until the passenger comes apart from the vehicle body to a certain distance where the belt is tensed. As a result, activation is delayed, and hence there arises a problem that satisfactory absorbance of the impact against the passenger becomes difficult. Also, there is another problem that the loosened belt may be caught by something or wound around something, which may cause improper operation of the airbag apparatus.

Document DE 100 09 028 A1, which is considered the closest prior art discloses an: airbag apparatus for use by a vehicle that is put on a passenger' s body in advance for absorbing an impact against the passenger comprising an airbag body and an inflator for inflating and deploying the airbag body provided on a wearing element to be worn by the passenger, an tear-off line device to be provided on a vehicle body, and an activation switch for connecting a free end of a tear-off line drawn from a retractor device and an operating portion of the inflator, whereby when the tensile strength of a predetermined value or higher is exerted to the connecting cable member, the activation switch is activated to operate the inflator, so that the airbag body is inflated and deployed.

### DESCRIPTION OF THE INVENTION

In view of such circumstances, it is an object of the invention to provide a novel vehicle airbag apparatus wherein the above-described problems are solved.

In order to achieve the above-described object, the invention according to Claim 1 is an airbag apparatus that is put on a vehicle passenger's body in advance for absorbing an impact against the passenger including: an airbag body and an inflator for inflating and deploying the airbag body provided on a wearing member to be worn by the passenger, an emergency locking retractor (ELR) device to be provided on a vehicle body, and an activation switch for connecting a free end of a connecting cable member drawn from the ELR device and an operating portion of the inflator, characterized in that when a tensile strength of a predetermined value or higher is exerted to the connecting cable member, the activation switch is activated to operate the inflator, so that the airbag body is inflated and deployed.

According to the invention, the passenger is not clogged from normal movement during a normal travel of the vehicle, and when the vehicle has a collision or the like, the airbag body is immediately inflated and deployed so that the impact against the passenger is effectively and adequately absorbed.

Another object of the invention is achieved by additional features of claim 2 wherein the activation switch, being a detachable type, is released from connection when a tensile strength of the predetermined value or higher is exerted to the connecting cable member, and activated.

With those characteristics, in addition to the effect in Claim 1, since the activation switch is activated when release of connection is sensed, thereby operating the inflator, the passenger can be moved apart from the vehicle body when the airbag body is inflated and deployed.

According to another preferred aspect, the apparatus of the invention is such that the ELR device is provided on a seat on which the passenger is seated.

Thereby, in addition to the effects of Claims 1 or 2, the ELR device can reduce the length of the connecting cable member drawn out therefrom, and hence good response is achieved.

### BRIEF DESCRIPTION OF THE DRAWINGS

The characteristics and advantages of the invention will be more fully understood on reading the description that follows and by referring to the appended drawings, given by way of illustration and in nowise limitative.

Fig. 1 is a side view of a motorcycle provided with a vehicle airbag apparatus according to the present invention.

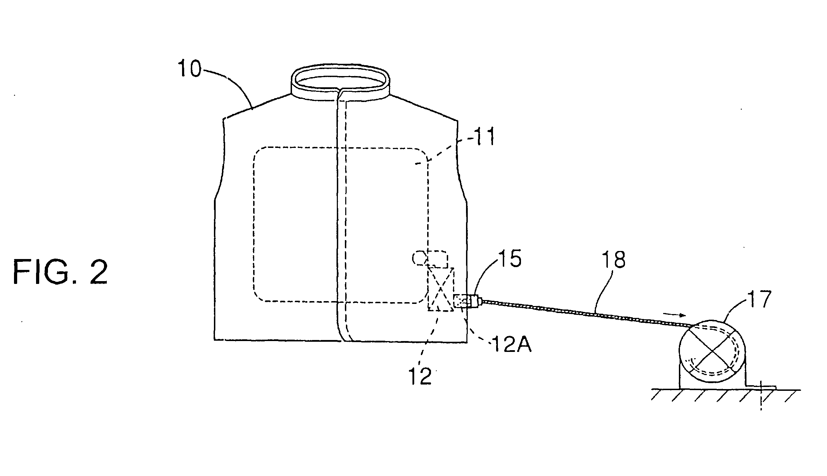

Fig. 2 is a general view of the airbag apparatus.

Fig. 3 is a side view of the motorcycle after the airbag apparatus has operated.

### BEST MODE FOR CARRYING OUT THE INVENTION

Referring now to examples of the present invention illustrated in the accompanied drawings, an embodiment of the present invention will be described in detail.

The embodiment illustrates a case in which an airbag apparatus of the present invention is applied to a motorcycle.

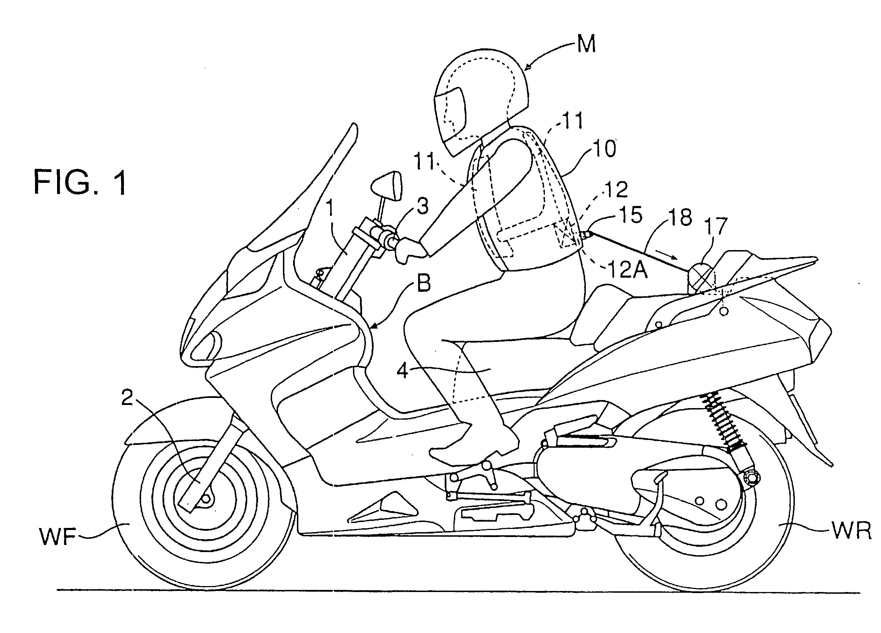

In Fig. 1, in a motorcycle of saddle-riding type, a front fork 2 having a front wheel WF journaled thereto is steerably supported on a head pipe 1 at a front end of a vehicle body B, and a steering handle 3 is provided at an upper end of the front fork 2. A rear wheel WR, which is driven by an engine, is suspended on a rear portion of the vehicle body B. A seat 4 is provided on an upper surface of the vehicle body B at a midsection in the fore-and-aft direction.

A passenger M wearing a wearing element 10 of wearing-type airbag apparatus, such as a vest provided with an airbag module, in advance, is seated on the seat 4. The wearing element 10 is provided with an airbag body 11 which guards the upper half body of the passenger M, and an inflator 12 on a lower rear position thereof. The inflator 12 generates a pressure gas for inflating and deploying the airbag body 11 when operated; the inflators known in the related art such as gas-type, solid-state type, mixed gas type, or air-suction type may be used.

A free end of a connecting cable 18 as a connecting cable member of an ELR device 17, described later is connected to an operating portion 12A of the inflator 12 via a detachable activation switch 15. The activation switch 15 is provided with a sensor for sensing a release of connection thereof, so that the inflator 12 is adapted to be operated by the sensing and reaction of the sensor.

A pretension lock device, so-called an ELR device (emergency locking retractor) 17, is mounted to a rear portion of the seat 4. The detachable activation switch 15 is connected to the free end of the connecting cable 18 drawn from the ELR device 17.

The ELR device 17 is known in the related art, and is normally provided with a pretension function for pulling the connecting cable 18 in a winding direction by a force to an extent that does not impair the normal operation by a spring such as a power spring to prevent the connecting cable 18 from sagging, and a locking function for locking drawing of the connecting cable 18 when an acceleration (relative acceleration between the passenger and the motorcycle) of the connecting cable 18 exceeds a stipulated value.

Subsequently, the operation of this embodiment will be described.

As shown in Fig. 1, the passenger M puts on the wearing member 10 provided with the airbag module including the airbag body 11, the inflator 12 and so on in advance, and then is seated on the seat 4 of the motorcycle, and the operating portion 12A of the inflator 12 and the free end of the connecting cable 18 of the ELR device 17 are connected via the detachable activation switch 15. Accordingly, the inflator 12 of the wearing member 10 worn by the passenger M and the ELR device 17 provided on the vehicle body B of the motorcycle are connected.

The passenger M checks the connection and starts traveling the motorcycle. Here, during a normal travel of the motorcycle, even when the inflator 12 on the passenger M side and the ELR device 17 on the vehicle body B side are connected by the connecting cable 18, only a tensile strength to an extent that does not hinder the normal movement is exerted on the connecting cable 18 by the function of the ELR device 17. In addition, since the drawing of the connecting cable 18 is accepted, the passenger M can move his/her body freely while being little conscious of the connection of the connecting cable 18, so that the normal operation can be continued.

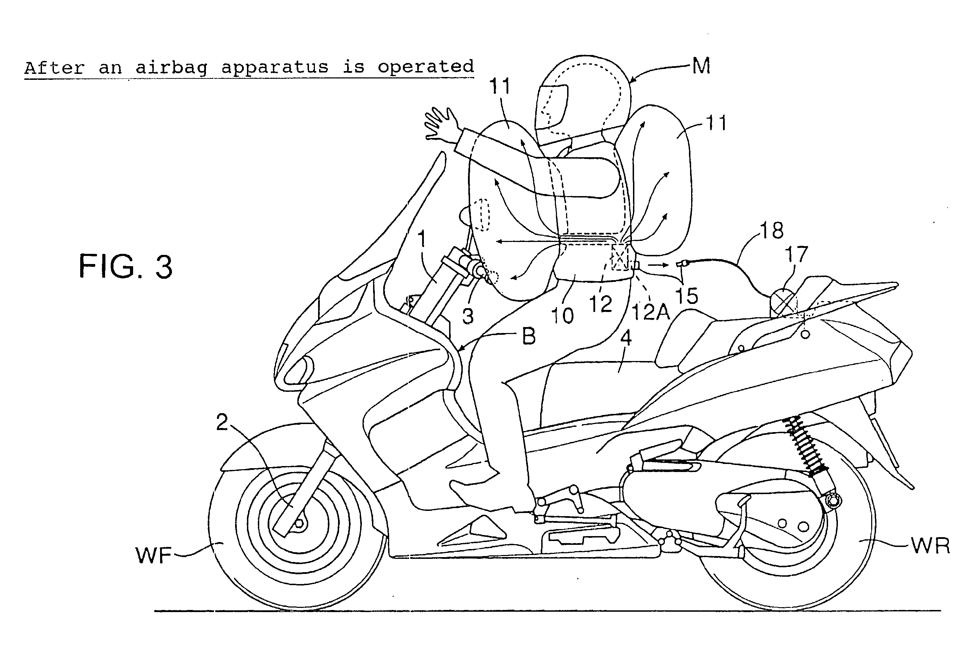

When an unfortunate accident such as a collision with another vehicle or obstacle is encountered during travel, the passenger M receives an abrupt force to move forwardly of the motorcycle, whereby a relative acceleration difference occurs between the passenger M and the motorcycle. Then, when the relative acceleration difference exceeds the predetermined value, the ELR device 17 is brought into a locked state, and the drawing of the connecting cable 18 is prevented. Therefore, as shown in Fig. 3, the connection of the detachable activation switch 15 is forcedly released, and the connection release sensor senses this release and activates the inflator 12. Accordingly, the airbag body 12 is inflated and deployed, and the passenger M can move apart from the vehicle body B, whereby the impact against the passenger M due to the collision with the obstacle can be absorbed.

In this manner, since the connecting cable 18 can detect the relative acceleration difference between the passenger M and the motorcycle which is generated immediately after the collision from the tensed state, and inflate and deploy the airbag body 11, the time from the collision to the inflation and deployment of the airbag body 11 can be reduced and hence the response can be improved, whereby the impact against the passenger upon collision can be absorbed. The ELR device 17, being mounted to the seat 4, can reduce the length of the connecting cable 18 and hence good response is achieved.

Although the embodiment of the present invention has been described so far, the present invention is not limited to the embodiment, and various embodiments are applicable within the scope of the invention.

For example, although an implementation for a motorcycle has been described in the above-described embodiment, the apparatus of the present invention can be implemented in other vehicles such as motortricycles as a matter of course. Also, while the activation switch employed is of a detachable type with activation by release of the connection, it is also possible to employ a switch which is activated in a connected state. While the connecting cable is employed as the connecting cable member drawn from the ELR device, it is also possible to employ another member having the same effect such as a connecting belt.

## Claims

1. Airbag apparatus for use by a vehicle that is put on a passenger' s (M) body in advance for absorbing an impact against the passenger (M) comprising: an airbag body (11) and an inflator (12) for inflating and deploying the airbag body (11) provided on a wearing element (10) to be worn by the passenger (M), an emergency locking retractor device (17) to be provided on a vehicle body (B) and provided with a locking function above a tensile strength of a predetermined value, and an activation switch (15) for connecting a free end of a connecting cable member (18) drawn from the emergency locking retractor device (17) and an operating portion (12A) of the inflator (12), whereby when said tensile strength of a predetermined value or higher is exerted to the connecting cable member (18), the activation switch (15) is activated to operate the inflator (12), so that the airbag body (11) is inflated and deployed.

2. Airbag apparatus according to Claim 1, wherein the activation switch (15), being a detachable type, is released from connection when said tensile strength of the predetermined value or higher is exerted to the connecting cable member (18), and activated.

3. Airbag apparatus according to Claim 1 or 2, wherein the emergency locking retractor device (17) is to be provided on a seat (4) on which the passenger (M) is seated.

## Patentansprüche

1. Airbaggerät zum Einsatz bei einem Fahrzeug, welches zuvor auf den Körper eines Passagiers (M) gesetzt ist, um einen Schlag gegen den Passagier (M) zu absorbieren, umfassend: einen Airbagkörper (11) und eine Aufblasvorrichtung (12) zum Aufblasen und Ausbringen des Airbagkörpers (11), bereitgestellt auf einem Trageelement (10), das vom Passagier (M) zu tragen ist, ferner eine Notfall-Klemmgurtvorrichtung (17), die an einem Fahrzeugkörper (B) vorzusehen ist und die oberhalb einer Zugkraft mit einem vorbestimmten Wert mit einer Klemmfunktion ausgestattet ist, sowie ferner einem Aktivierungsschalter (15) zum Anschließen eines freien Endes eines Anschlusskabelelements (18), das von der Notfall-Klemmgurtvorrichtung (17) gezogen ist, an einen Betätigungsabschnitt (12A) der Aufblasvorrichtung (12), wobei dann, wenn die Zugkraft mit einem vorbestimmten Wert oder höher auf das Anschlusskabelelement (18) ausgeübt wird, der Aktivierungsschalter (15) aktiviert wird, um die Aufblasvorrichtung (12) zu betätigen, so dass der Airbagkörper (11) aufgeblasen und ausgebracht wird.

2. Airbaggerät nach Anspruch 1, wobei der Aktivierungsschalter (15), der von einem abnehmbaren Typ ist, außer Anschluss gelangt, wenn die Zugkraft mit dem vorbestimmten Wert oder höher auf das Anschlusskabelelement (18) ausgeübt wird und aktiviert wird.

3. Airbaggerät nach Anspruch 1 oder 2, wobei die Notfall-Klemmgurtvorrichtung (17) an einem Sitz (4) vorzusehen ist, auf dem der Passagier (M) sitzt.

## Revendications

1. Dispositif à coussin de sécurité gonflable destiné à être utilisé par un véhicule qui est placé sur un corps de passager (M) à l'avance pour absorber un choc contre le passager (M) comprenant : un corps de coussin de sécurité gonflable (11) et un gonfleur (12) pour gonfler et déployer le corps du coussin de sécurité gonflable (11) prévu sur un élément de vêtement (10) destiné à être porté par le passager (M), un dispositif de déblocage d'urgence (17) destiné à être prévu sur un corps (B) de véhicule et doté d'une fonction de blocage au-dessus d'une force de traction d'une valeur prédéterminée, et un interrupteur d'activation (15) pour raccorder une extrémité libre d'un élément de câble de raccordement (18) tiré par le dispositif de déblocage d'urgence (17), et une partie de commande (12A) du gonfleur (12), moyennant quoi lorsque ladite force de traction d'une valeur prédéterminée ou supérieure est exercée sur l'élément de câble de raccordement (18), l'interrupteur d'activation (15) est activé pour actionner le gonfleur (12), de sorte que le corps du coussin de sécurité gonflable (11) est gonflé et déployé.

2. Dispositif à coussin de sécurité gonflable selon la revendication 1, dans lequel l'interrupteur d'activation (15), étant d'un type détachable, est libéré du raccordement lorsque ladite force de traction de la valeur prédéterminée ou supérieure est exercée sur l'élément de câble de raccordement (18), et activée.

3. Dispositif à coussin de sécurité gonflable selon la revendication 1 ou 2, dans lequel le dispositif de déblocage d'urgence (17) doit être prévu sur un siège (4) sur lequel le passager (M) est assis.
